# EUROPEAN PATENT SPECIFICATION

(11) **EP 2 955 159 B1**
(45) Date of publication and mention of the grant of the patent: **02.10.2019**
(21) Application number: 14749362.1
(22) Date of filing: 06.02.2014
(51) Int. Cl.: C02F 1/28, C02F 1/42, B01J 20/26, B01D 39/10, B82Y 30/00, B01J 20/32, B01J 20/28, C02F 1/00, C02F 101/10, B01J 20/06, B01J 20/30

(54) **FILTER FOR THE TREATMENT OF LIQUIDS WITH MAGNETITE NANOPARTICLES AND CORRESPONDING MANUFACTURING METHOD**
FILTER ZUR BEHANDLUNG VON FLÜSSIGKEITEN MIT MAGNETIT-NANOPARTIKELN UND ENTSPRECHENDE HERSTELLUNGSVERFAHREN
FILTRE DE TRAITEMENT DE LIQUIDES À NANOPARTICULES DE MAGNÉTITE ET PROCÉDÉS CORRESPONDANTS DE FABRICATION

(30) Priority: 06.02.2013 ES 201330144
(43) Date of publication of application: 16.12.2015
(73) Proprietor: Universitat Autònoma de Barcelona, 08193 Bellaterra (ES); Acondicionamiento Tarrasense (Centro Tecnológico LEITAT), 08225 Terrassa (ES)
(72) Inventor: VALIENTE MALMAGRO, Manuel, E-08193 Cerdanyola del Vallès (Barcelona) (ES); PÉREZ GONZÁLEZ, Gustavo, E-08193 Bellaterra (Cerdanyola del Vallès) (Barcelona) (ES); MORILLO MARTÍN, Diego, E-08225 Terrassa (Barcelona) (ES); FACCINI, Mirko, E-08225 Terrassa (Barcelona) (ES); AUBOUY, Laurent, E-08225 Terrassa (Barcelona) (ES); AMANTIA, David, E-08225 Terrassa (Barcelona) (ES)
(74) Representative: Ponti & Partners, S.L.P
(86) International application number: PCT/ES2014/070085
(87) International publication number: WO 2014/122350

(56) References cited:
- US-A1- 2010 307 980
- US-A1- 2010 307 980
- CUMBAL L ET AL: "Polymer supported inorganic nanoparticles: characterization and environmental applications", REACTIVE & FUNCTIONAL POLYMERS, ELSEVIER SCIENCE PUBLISHERS BV, NL, vol. 54, no. 1-3, 1 January 2003 (2003-01-01), pages 167-180, XP004401153, ISSN: 1381-5148, DOI: 10.1016/S1381-5148(02)00192-X
- ZHANG D ET AL: "Electrospun polyacrylonitrile nanocomposite fibers reinforced with Fe"3O"4 nanoparticles: Fabrication and property analysis", POLYMER, ELSEVIER SCIENCE PUBLISHERS B.V, GB, vol. 50, no. 17, 12 August 2009 (2009-08-12), pages 4189-4198, XP026420931, ISSN: 0032-3861 [retrieved on 2009-06-30]
- MASOUMEH BAYAT ET AL: "Electromagnetic properties of electrospun FeO/carbon composite nanofibers", POLYMER, ELSEVIER SCIENCE PUBLISHERS B.V, GB, vol. 52, no. 7, 30 January 2011 (2011-01-30), pages 1645-1653, XP028162493, ISSN: 0032-3861, DOI: 10.1016/J.POLYMER.2011.01.057 [retrieved on 2011-02-09]
- H. R. LOHOKARE ET AL.: 'Effective arsenic removal using polyacrylonitrile-based ultrafiltration (UF) membrane' JOURNAL OF MEMBRANE SCIENCE vol. 320, 2008, pages 159 - 166, XP022761120
- M. J. DE MARCO ET AL.: 'Arsenic removal using a polymeric/inorganic hybrid sorbent' WATER RESEARCH vol. 37, 2003, pages 164 - 176, XP004390523
- L. CUMBAL ET AL.: 'Polymer supported inorganic nanoparticles: Characterization and environmental applications' REACTIVE & FUNCTIONAL POLYMERS vol. 54, 2003, pages 167 - 180, XP004401153
- A. NILCHI ET AL.: 'Removal of arsenic form aqueous solutions by an adsorption process with titania-silica binary oxide nanoparticle loaded polyacrylonitrile polymer' JOURNAL OF APPLIED POLYMER SCIENCE vol. 119, 2011, pages 3495 - 3503, XP055284519
- L. CUMBAL ET AL.: 'Arsenic removal using polymer-supported hydrated iron (III) oxide nanoparticles: Role of Donnan membrane effect' ENVIRONMENTAL SCIENCE &TECHNOLOGY vol. 39, 2005, pages 6508 - 6515, XP055284690

## Description

### Field of the invention

The invention relates to a liquid treatment filter, a method for manufacturing a support for a liquid treatment filter and a method for treating a liquid.

### State of the art

The contamination of water by arsenic (usually in the form of inorganic As(III) and As(V)) is a public health problem in several places. The use of iron oxides for removing metals in general and arsenic in particular is well known. Among these iron oxides, magnetite, in nanoparticles, is particularly effective. These magnetite nanoparticles are usually referred to as SPION (SuperParamagnetic Iron Oxide Nanoparticles).

The document Morillo, D, Valiente, M., Perez, G., "Avances en la adsorción de Arsénico con Nanopartículas", Research Project, University Degree in Chemical Technologies and Science of the Autonomous University of Barcelona, September 2009, discloses the use of a cellulose sponge as a support, in which SPION has been dispersed, for removing arsenic in water.

The document "Electromagnetic properties of electrospun Fe3O4/carbon composite nanofibers". Bayat et al., Polymer 52 (2011)1645-53, discloses nanofibers made of PAN which contain different quantities of magnetite nanoparticles.

The document "Polyacrylonitrile-based nanofibers - A state of the art review". Nataraj, et al. Progress in Polymer Science 37 (2012) 487-513, discloses the production of PAN nanofibers and mentions their possible use as a support for iron oxide nanoparticles for its application as a filter.

The document "Effective arsenic removal using polyacrylonitrile-based ultrafiltration (UF) membrane" H.R. Lohokare, et al. Journal of Membrane Science, 320 (2008) 159-166, discloses an ultrafiltration membrane which is used for removing arsenic from water. The polymeric material which constitutes the membrane is polyacrylonitrile previously subjected to hydrolysis with a solution of sodium hydroxide 1 N at 45° C for the formation of carboxylate groups on the polymeric surface, said document does not disclose the incorporation of nanoparticles of iron oxide in the support. The removal of the arsenic present in water is due to the rejection capability presented by the modified membrane against Arsenic following Donnan's exclusion principle (repulsion of arsenic by means of the surface charges of the membrane). The carboxyl groups on the surface of the polyacrylonitrile generate electrostatic repulsion which rejects the arsenic ions.

The document WO 2007/032860 (J. TRANTER TROY et al) - with priority patent application number 11/210.577 and granted patent number 7.807.606 - and document US 20100307980 A1 (J. TRANTER TROY et al.) of publication date 09.12.2010, which is a divisional document of the previous patent, discloses a filter for removing arsenic from water comprising a support made of polyacrylonitrile (PAN) loaded with incorporated nanoparticles of metal oxide or hydroxide, in particular hydrated iron oxide. It is also disclosed the method for obtaining the material from a solution or suspension of nanoparticles of iron oxide to which polyacrylonitrile in fibres is added thus obtaining an adsorbent material. Similar documents are: CUMBAL I. et al: "Polymer supported inorganic nanoparticles: characterization and environmental application" in Reactive and Functional Polymers, vol. 54, no. 1-3; pages 167-180; US 2010/307980 A1; ZHANG D. et al: "Electrospun polyacrylonitrile nanocomposite fibers reinforced with Fe3O4 nanoparticles: Fabrication and property analysis" in Polymer, Elsevier Science Publisher BV, Vol. 50, no. 17, pages 4189-4198.

There remains, however, the need to continue improving the efficiency of the filters based on SPION for the treatment of water and liquids in general, since neither of the two above patents, nor any of the preceding documents disclose the liquid treatment filter disclosed in the present invention. Said invention presents a far greater efficiency than that described in the background documents.

In addition, the present invention develops an adsorbent material of high porosity and low density which makes filtration more efficient and avoids the need to work at low pressure, as distinct from the case with the ultrafiltration membranes.

### Summary of the invention

The object of the invention is a liquid treatment filter characterised in that it comprises a support made of a polymeric material having at least one functional group of the group made up of carboxyl and thiol, loaded with SPION.

Effectively, it has been observed that filters with supports such as the ones indicated have a far higher arsenic adsorption capacity than that presented by filters with known supports. Probably this is due to the fact that with the indicated supports it is possible to reduce the tendency of the SPION particles to bundle since carboxyl and/or thiol groups have a better capacity of fixation of the SPION particles. In this way a greater active specific surface is achieved and, consequently, a greater adsorption capacity of arsenic and, in general, of the metals required to be removed. Also, this greater efficacy entails other improvements, such as for example a reduction in the storage volume of filter residues.

The support is made of fibres of hydrolysed polyacrylonitrile with the general formula 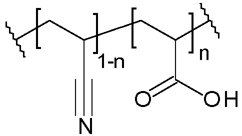 wherein n is comprised between 0.01 and 1.

The use of PAN fibres is known. However, in the present invention it has been discovered that during the hydrolysis reaction (to provide the PAN fibres with carboxyl groups, also referred as HPAN), the resulting fibres undergo a process of swelling, which favours the contact and passage of the liquid therethrough.

Advantageously, SPION has an average particle size comprised between 1 nm and 100 nm, and more preferably between 5 nm and 30 nm.

Advantageously, the fibres have an average size comprised between 100 nm and 3 µm, and more preferably between 300 nm and µm. It has been observed that within these fibre size ranges there is maximum adsorption capacity. In general, in the present description and claims reference made to the size of the fibres refers to their diameter.

Advantageously, the SPION content is less than 40 mg of SPION per g of fibre, and more preferably is less than 20 mg of SPION per g of fibre. Probably, this is due to the fact that greater quantities of SPION favour bundling thereof, making it difficult to obtain the maximum advantage.

Another object of the invention is a method for manufacturing a support for a liquid treatment filter characterised in that it comprises:
[a] a step of electrospinning in which a PAN solution is prepared in an aqueous solvent with a PAN content comprised between 5 and 80% by weight, with respect to the total weight of the solution and preferably comprised between 8.5 and 15% by weight, with respect to the total weight of the solution,
[b] a step of hydrolysis of the PAN fibres formed in step [a], and
[c] a step of loading the fibres with SPION.

Effectively, this method has made it possible to obtain the support loaded with SPION with the abovementioned improvements.

Preferably, the step of hydrolysis is carried out by immersion of the fibres in an aqueous solution of an alkaline earth metal hydroxide which, advantageously has a pH comprised between 11 and 13 and/or a temperature comprised between 25°C and 100°C.

Likewise, an object of the invention is a method for treating a liquid, characterised in that it makes the liquid to be purified pass through a filter according to the invention. Preferably the liquid is water, and preferably the liquid to be purified contains As(III) and/or As(V).

### Brief description of the drawings

Other advantages and characteristics of the invention can be appreciated from the following description, wherein, without limitation, preferred embodiments of the invention are set out, with reference to the attached drawings. The figures show:
Fig. 1. Effect of PAN concentration on the size of the fibres and on the modification thereof.
Fig. 2. Comparison of the adsorption capacity of HPAN-SPION and of SPION loaded on a Forager sponge.
Fig. 3. Adsorption capacity of each synthesised adsorption system.
Fig. 4. Adsorption capacity with respect to fibre size.

### Detailed description of the embodiments of the invention

### 1 - Methodology

### 1.1 - Synthesis of PAN fibres

Electrospinning solutions were prepared by means of PAN solutions of between 7 and 15 % by weight in DMF (dimethylformamide). Magnetic agitation was applied for 3 hours at 60°C for the purpose of obtaining homogeneous PAN solutions. The electrospinning solution was placed in a 10 ml syringe with a metal needle of 0.020 mm in diameter. A power source was used to provide a high voltage of 20 to 30 kV to the tip of the syringe needle and to a metal collector. The electrospun fibres were collected on a sheet of aluminium obtaining thereby a textile material with a size of 60x20 cm. A distance from the collector to the tip comprised between 10 and 30 cm was used, and a flow rate of the solution comprised between 0.1 and 2.0 ml/h. All electrospinning methods were carried out at room temperature (25°C) with a relative humidity of 50%. The obtained fibres were dried in a vacuum oven for a period of 24 hours at 60 °C to perform adsorption experiments and characterisations.

### 1.2 - Modification of PAN and synthesis of HPAN fibres loaded with SPION

PAN fibres with a surface area of 200 cm² were immersed in 100 ml of NaOH at 15% for 60 minutes at 50 °C. Subsequently, the membrane was washed with distilled water and was placed in HCI 1.0 M at room temperature for 120 minutes. The colour of yellowish hydrolysed PAN fibres (referred to as HPAN) became white (the initial colour). Following this, the membrane was immersed in 100 ml of a solution of ethylene diamine (EDA) at 10% for 60 minutes at room temperature (HPAN-EDA). Finally, the fibres of HPAN and HPAN-EDA were immersed in 100 ml of a solution of TMAOH 0.01 M with different quantities of SPION nanoparticles (from 0 to 15 mg of SPION) for a period of 12 hours at room temperature.

The PAN and HPAN fibres loaded with SPION were characterised by using a Transmission Electron Microscope (TEM), a Scanning Electron Microscope (SEM) and an Attenuated Total Reflectance Fourier Transform Infrared Spectrometer (ATR-FTIR). The HPAN-EDA fibres were not characterised due to the reduced capacity of fixation of the SPION nanoparticles to said fibres, as shown further below.

### 1.3 - Discontinuous arsenic As(V) adsorption

The first adsorption studies were carried out in discontinuous mode. 100 mg of HPAN fibre loaded with SPION (this quantity remained constant throughout all of the experiments, in continuous and discontinuous mode) were immersed in 50 ml of an arsenate solution at 100 ppm at a pH comprised between 3.6 and 4.0. The solution was shaked in a vibration machine for 1 hour. The quantity of arsenic adsorbed in the fibre was determined by measuring initial and final concentrations of arsenic by means of a UV/Vis spectrophotometer in a wavelength of 880 nm using a colorimetric reagent. The results obtained by means of the UV/Vis spectrophotometry were verified by using ICP-MS (Inductively coupled plasma mass spectrometry).

These studies were carried out in extreme conditions due to the fact that the U.S. EPA has reduced the maximum permissible concentration in water to 10ppb. Next, experiments were conducted at 100ppm of As(V), for the purpose of saturating the adsorbent system and to be able to observe its capacity of adsorption.

### 1.4 - Arsenic As(V) adsorption in continuous mode

The second step involved improving the adsorption system by using a continuous mode of adsorption in a column. 100 mg of HPAN fibres loaded with SPION were introduced in two columns of different sizes (10x1.0 and 20x1.5 cm) and 2 litres of 20ppm of As(V) were made to pass through the column at a flow rate of 1 ml/min for 24 hours. The periodic sample collection took place at the following times: 0, 1, 2, 3, 4, 5, 10, 15, 20, 30, 60, 90, 120, 150, 180, 210, 240, 270, 300, 330, 360, 1320 and 1440 minutes.

### 1.5 - Application of the adsorbent system on a real sample of waste water

Leachate was used to conduct these experiments. This leachate (the pH of the solution is approximately 4) is free of As(V) and is doped with 5 ppm of As(V) in solution. The conditions of the experiment were the same as in the continuous mode with a column size of 20x1.5 cm.

### 2 - Results and discussion

### 2.1 - Characterisation of PAN and hydrolysed PAN fibres

### Transmission Electron Microscope (TEM).

The following method was used to modify the PAN fibres obtained by electrospinning:

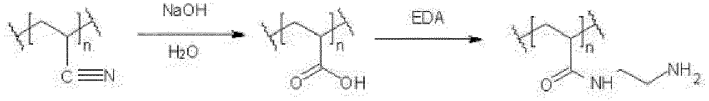

Starting out with PAN hydrolysed PAN (HPAN) was obtained following a step of hydrolysis with NaOH. Additionally, HPAN was made to react with ethylene diamine (EDA) to obtain HPAN-EDA.

For the purpose of determining the optimum concentration of PAN to produce the most useful fibres for this application, fibre preparations were made at different concentrations of PAN.

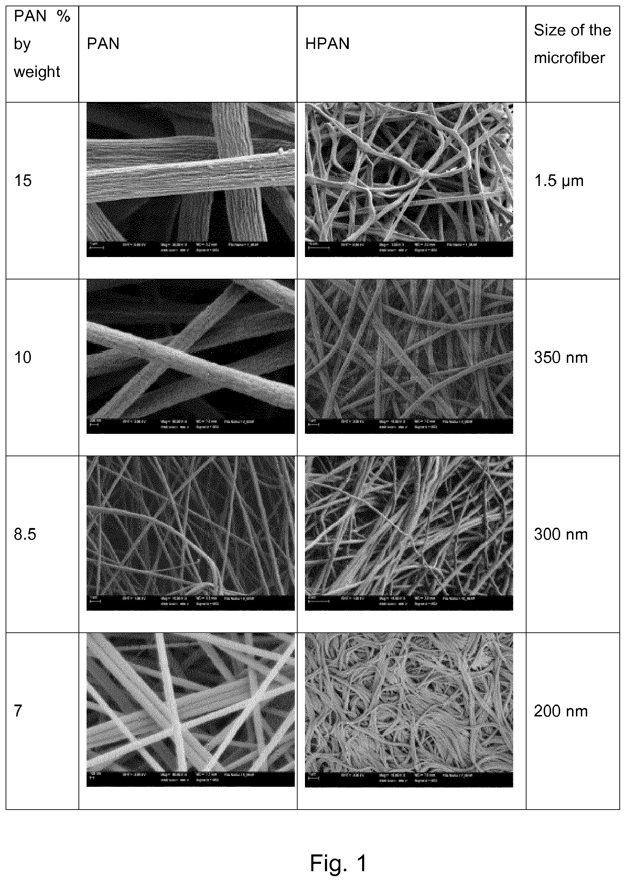

As shown in Fig. 1, an increase in the concentration of PAN in the electrospinning solution produces an increase in the size of the fibres, in such a way that sizes greater than the micron are obtained when there is a high concentration of PAN (15 % by weight).

### 2.2 - Characterisation of the HPAN fibres loaded with SPION

The starting method for fixation of SPION on the fibres was developed in all three types of electrospun fibres: PAN, HPAN and HPAN-EDA. These preparations were carried out to verify what is disclosed in the related literature, which indicates that electrospun HPAN-EDA fibres are the most effective for fixation of SPION due to the presence of amide and amine groups.

However, surprisingly it has been observed that the PAN and HPAN-EDA fibres have a lower fixation of the SPION nanoparticles, following 12 hours of contact, than the HPAN fibres. The HPAN fibres show a practically total fixation of the SPION nanoparticles of the suspension (the maximum quantity is 150 mg of SPION per gram of fibre).

The quantity of SPION which is fixed on the surface of the HPAN fibres is quantified by means of the ICP-MS following the preparation of samples by means of the microwave digestion system. The following table shows the quantity of SPION fixed on the fibres with respect to the theoretical value.

| | Fe in sample / mg | SPION in sample / mg | Theoretical SPION / mg |
|---|---|---|---|
| PAN - SPION | 0.73 | 1.01 | 14.41 |
| HPAN - SPION | 10.12 | 13.98 | 14.41 |
| HPAN-EDA - SPION | 0.94 | 1.29 | 14.41 |

The results show that 97% of the initial quantity of SPION was fixed on the surface of the HPAN fibres versus 7% and 9% fixed on the HPAN-EDA and PAN fibres, respectively. This is particularly surprising since the documents of the state of the art propose the transformation of PAN into HPAN-EDA to improve the fixation of SPION and, although the formation process of HPAN-EDA includes a step of HPAN formation, the possibility of using HPAN as support for the SPION is not even suggested. Therefore, the state of the art, by directly ruling out HPAN as a support for SPION is creating a technical prejudice against this possibility since the reading of this document would discourage the reader from trying to use HPAN as a support for SPION.

### 2.3 - Discontinuous arsenic As(V) adsorption

Different experiments were developed in a discontinuous mode for the purpose of analysing the different adsorbent systems carried out and determining their adsorption capacity. An initial comparison with another adsorbent system can provide information with respect to the improvement in the adsorption capacity. The study of the effect of the PAN concentration in the electrospinning solution on the adsorption capacity will determine the range of sizes of the fibres, in which the latter provide a better value of the adsorption capacity.

### 2.3.1 - Comparison between the capacity of adsorption of As(V) of the HPAN fibres loaded with SPION and of the SPION nanoparticles on a Forager® sponge.

According to the state of the art (see document "Master de D. Morillo" quoted above), the SPION nanoparticles loaded on a Forager® sponge constitute an adsorbent system that shows a high adsorption capacity due to a good dispersion of SPION on the cellulose surface of the sponge.

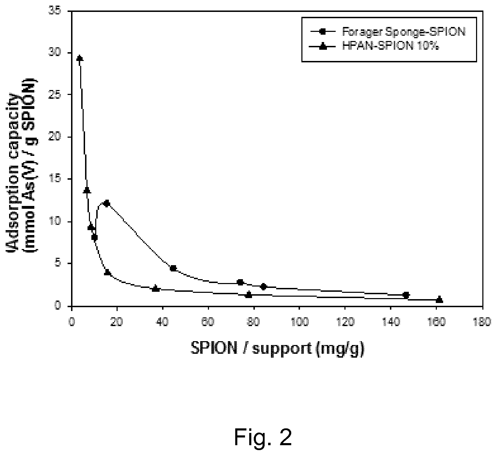

As shown in Fig. 2, the HPAN fibres loaded with SPION have a different adsorption profile with respect to that of the sponge. The new adsorbent material has a reduced adsorption capacity when the quantity of SPION present in the HPAN fibre is high. It seems that the SPION bundles on the surface of the HPAN fibre which does not allow the SPION to function in an optimal way (increase in bundling, decrease of the specific surface and decrease of the adsorption capacity).

However, when the quantity of SPION is comprised between approximately 5 and 40 mg per gram of HPAN fibre, the adsorption capacity increases exponentially and the adsorption capacity reaches 32 mmol As(V) / g of SPION, almost three times more than the SPION nanoparticles loaded on the Forager® sponge.

### 2.3.2 - Adsorption of As(V) for different sizes of HPAN fibres loaded with SPION

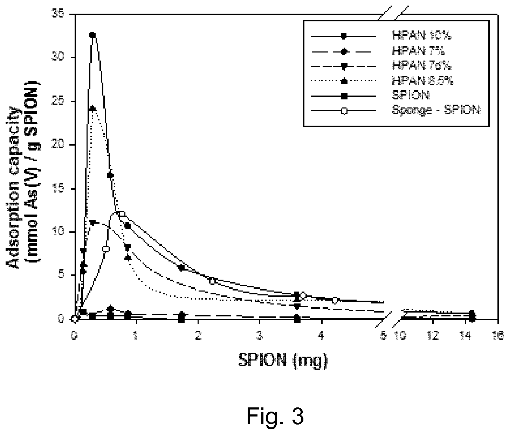

Fig. 3 presents the results of the adsorption capacity of the different fibres of HPAN loaded with SPION which have been synthesised with different concentrations of PAN in the electrospinning solution. As already mentioned, the PAN concentration in the electrospinning solution turns into a different size of the obtained fibres. The difference between the "HPAN 7 %" test and the "HPAN 7d %" test lies in the fact that in the case of HPAN 7d the electrospinning time has been doubled, thereby depositing a layer of fibres on the electrospinning collector with double thickness, while maintaining the diameter of the fibres.

The comparison of the adsorption capacity of As(V) that is obtained either with the nanoparticles of SPION used in a direct manner (in other words, directly in suspension of the water to be purified, without any support), or with the nanoparticles of SPION loaded on the Forager® sponge, with respect to the adsorbent systems based on fibres, show that these reach a similar or superior adsorption capacity, except in the case of the HPAN fibres with a size of 250 nm. In this case it appears that two effects have occurred: on the one hand, the bundling of fibres causes a decrease of the penetration of the solution to be treated in the adsorption system and, on the other hand, the dispersion of SPION is lower than in other cases.

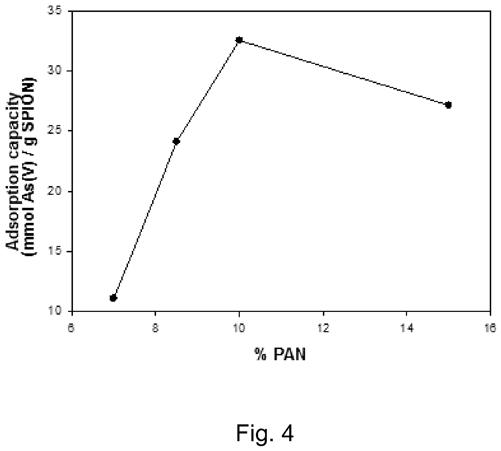

When comparing the compounds of synthesized fibres, the HPAN fibres loaded with SPION with fibres having a size of 350 nm have the maximum adsorption capacity and the optimum quantity of SPION is of approximately 2.9 mg of SPION per gram of HPAN on the surface of the fibres. As distinct from what might be expected, the lower size fibres have a lower adsorption capacity (Fig. 4). This lower adsorption capacity may be due to the distribution of the HPAN fibres as shown in the TEM images in Fig. 1. Therefore, the bundling of the fibres affects the dispersion of SPION due to the fact that these have a lower contact surface for the SPION.

An interesting and important observation in the case of the HPAN fibres loaded with SPION, with a fibre size of 350 nm, is that the compound of fibres grows in large proportions (it swells). Thus, for example, 100 mg of HPAN fibres loaded with SPION can occupy, in two hours, a volume of 500 ml of an aqueous solution.

### 2.4 - Adsorption of As(V) in continuous mode

Once the optimum size and maximum adsorption capacity in discontinuous mode was determined, adsorption experiments were conducted in continuous mode for the purpose of observing the behaviour of the adsorbent system in a real working mode of a future application and for this reason, different column sizes were used.

### 2.4.1 - Columns of 10x1 cm:

Three adsorption experiments were conducted in continuous mode by gravity with HPAN fibres loaded with SPION which had different quantities of SPION per gram of HPAN (144.1 mg of SPION; 2.9 mg and one HPAN blank). It was observed that in the HPAN fibres loaded with SPION, the greater the quantity of SPION, the greater the increase in the compression of the fibres inside the column. This fact is problematic for the adsorption process because the contact surface between the fibres and the arsenic solution decreases and, consequently, the contact time is lower.

It was similarly observed that the HPAN fibres loaded with SPION at 2.9 mg of SPION per gram of HPAN had an adsorption capacity of approximately 52.6 mmol of As(V) per gram of SPION, which is approximately double that of the same sample in the discontinuous test (point 2.3 above). This is probably due to the fact that, in continuous mode, the solution can penetrate the fibre compound more easily, in such a way that it causes the As(V) to be retained more effectively.

In this adsorption method, two different problems appear: the compression of the fibre compound and the fast adsorption of As(V). It has been observed that after 10 minutes, the HPAN fibres loaded with SPION are saturated and the adsorption is over.

The results show that adsorptions in a column are more effective than adsorptions in discontinuous mode.

### 2.4.2 - Columns of 20x1.5 cm:

Adsorption experiments were conducted in continuous mode both by gravity and by backwashing for the HPAN-SPION fibre compounds with 2.9 mg of SPION per gram of HPAN (optimum quantity) in columns of 20x1.5 cm. In this case, the compound of HPAN-SPION fibres is not compressed during the entire experiment. This fact resolves a problematic point in the adsorption process when smaller columns are used.

As shown by the results in the following table, whereas adsorption in gravity mode reaches up to 20.25 mol of As(V)/g of SPION, the adsorption in backwash obtains an adsorption capacity of approximately 63 mol of As(V)/g of SPION. Therefore, the system adsorption capacity reaches 850 mg of As(V) / g of the adsorbent system.

This result is higher than that of all the adsorbent systems studied and observed in the literature. This fact could be due to having a system with a large specific surface, which generates a high dispersion of the SPION, avoiding bundling due to the magnetism of the nanoparticles, and which allows the solution of arsenic to circulate through the system with greater ease making contact with the active adsorption centres (SPION) more effective.

| Parameters | Gravity | Backwash 1 | Backwash 2 |
|---|---|---|---|
| Desorbent | 1.0M HNO₃ | 1.0M HNO₃ | 0.5M H₃PO₄ |
| Contact time (min) | 20 | 60 | 60 |
| As(V) adsorbed (mg) | 28.4 | 83.9 | 86.1 |
| Q max (mol As / g SPION) | 20.25 | 62.30 | 64.51 |
| Q System (mg As / g HPAN-SPION) | 317.7 | 830.1 | 851.7 |
| Desorption time (min) | 90 | 90 | 90 |
| As(V) desorbed (mg) | 0.32 | 8.48 | 6.64 |

With respect to the desorption process, in this case, only 10% of the adsorbed As(V) had been recovered using desorbent solutions, such as nitric acid or phosphoric acid. This step is carried out in an optimisation method for the purpose of obtaining a greater percentage of recovery.

One important consideration is the system behaviour over time. The backwash experiments have a different profile with respect to the experiment by gravity, noting that the backwash experiments provide a greater adsorption for a longer period of time. This fact could be due to the backwashing experiments eliminating the possibility of preferred adsorption channels being generated, thus forcing the arsenic solution to come into contact with the entire surface of the adsorbent system.

### 2.5 - Application of the adsorbent system on real samples of waste water

Adsorption and desorption experiments were performed to study the behaviour of a real sample and to verify whether the adsorbent system was useful for this application when real contaminated water is to be treated.

A comparison was made between a real sample (discharge leachate) and the synthetic experiment of the behaviour in backwash to observe whether the adsorbent system worked in the same way, verifying that both experiments were similar.

## Claims

1. Liquid treatment filter **characterised in that** it comprises a support made of a polymeric fibers which has at least one functional group from the group made up of carboxyl and thiol, on which surface SuperParamagnetic Iron Oxide Nanoparticles (SPION) are fixed, wherein said support are fibres of hydrolysed polyacrylonitrile (PAN) of general formula 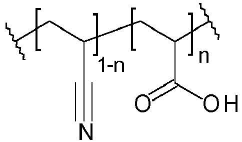 wherein n has a value comprised between 0.01 and 1.

2. Filter according to claim 1, **characterised in that** said SPION has an average particle size comprised between 1 nm and 100 nm.

3. Filter according to claim 2, **characterised in that** said SPION has an average particle size comprised between 5 nm and 30 nm.

4. Filter according to any of claims 2 to 3, **characterised in that** said fibres have an average size comprised between 100 nm and 3 µm.

5. Filter according to claim 4, **characterised in that** said fibres have an average size comprised between 300 nm and 1µm.

6. Filter according to any of claims 2 to 5, **characterised in that** the content of SPION is less than 40 mg of SPION per g of fibre.

7. Filter according to claim 6, **characterised in that** the content of SPION is less than 20 mg of SPION per g of fibre.

8. Method for manufacturing a support for a liquid treatment filter according to claim 1 **characterised in that** it comprises:
[a] a step of electrospinning in which a PAN solution is prepared in a solvent with a PAN content comprised between 5 and 80% by weight, with respect to the total weight of the solution and preferably comprised between 8.5 and 15% by weight, with respect to the total weight of the solution,
[b] a step of hydrolysis of the PAN fibres formed in step [a], and
[c] a step of fixing SPION on the surface of said fibres.

9. Method according to claim 8, **characterised in that** said hydrolysis step is carried out by immersion of said fibres in an aqueous solution of an alkaline earth metal hydroxide.

10. Method according to claim 9, **characterised in that** said aqueous solution has a pH comprised between 11 and 13.

11. Method according to any of claims 9 or 10, **characterised in that** said aqueous solution is at a temperature comprised between 25°C and 100°C.

12. Method of treatment of a liquid, **characterised in that** the liquid is made to pass through a filter according to any of claims 1 to 7.

13. Method according to claim 12, **characterised in that** the liquid to be purified contains As(III) and/or As(V).

## Patentansprüche

1. Filter zur Behandlung von Flüssigkeiten, **dadurch gekennzeichnet, dass** er einen aus Polymerfasern hergestellten Träger umfasst, die mindestens eine funktionelle Gruppe aus der Gruppe, die Carboxyl und Thiol enthält, aufweisen, auf deren Oberfläche superparamagnetische Eisenoxid-Nanopartikel (SPION) fixiert sind, wobei es sich bei dem Träger um Fasern von hydrolysiertem Polyacrylnitril (PAN) der allgemeinen Formel 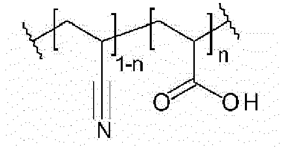 handelt, wobei n einen Wert zwischen 0,01 und 1 aufweist.

2. Filter nach Anspruch 1, **dadurch gekennzeichnet, dass** die SPION eine durchschnittliche Teilchengröße zwischen 1 nm und 100 nm aufweisen.

3. Filter nach Anspruch 2, **dadurch gekennzeichnet, dass** die SPION eine durchschnittliche Teilchengröße zwischen 5 nm und 30 nm aufweisen.

4. Filter nach einem der Ansprüche 2 bis 3, **dadurch gekennzeichnet, dass** die Fasern eine durchschnittliche Größe zwischen 100 nm und 3 µm aufweisen.

5. Filter nach Anspruch 4, **dadurch gekennzeichnet, dass** die Fasern eine durchschnittliche Größe zwischen 300 nm und 1 µm aufweisen.

6. Filter nach einem der Ansprüche 2 bis 5, **dadurch gekennzeichnet, dass** der Anteil an SPION weniger als 40 mg SPION pro g Fasern beträgt.

7. Filter nach Anspruch 6, **dadurch gekennzeichnet, dass** der Anteil an SPION weniger als 20 mg SPION pro g Fasern beträgt.

8. Verfahren zur Herstellung eines Trägers für einen Filter zur Behandlung von Flüssigkeiten nach Anspruch 1, **dadurch gekennzeichnet, dass** es Folgendes umfasst:
[a] eine Stufe des Elektrospinnens, bei der eine PAN-Lösung in einem Lösungsmittel mit einem PAN-Gehalt zwischen 5 und 80 Gew.-%, bezogen auf das Gesamtgewicht der Lösung, und vorzugsweise zwischen 8,5 und 15 Gew.-%, bezogen auf das Gesamtgewicht der Lösung, hergestellt wird,
{b] eine Stufe der Hydrolyse der in Stufe [a] gebildeten PAN-Fasern und
[c] eine Stufe der Fixierung von SPION an der Oberfläche der Fasern.

9. Verfahren nach Anspruch 8, **dadurch gekennzeichnet, dass** die Hydrolysestufe durch Eintauchen der Fasern in eine wässrige Lösung eines Erdalkalimetallhydroxids durchgeführt wird.

10. Verfahren nach Anspruch 9, **dadurch gekennzeichnet, dass** die wässrige Lösung einen pH-Wert zwischen 11 und 13 aufweist.

11. Verfahren nach Anspruch 9 oder 10, **dadurch gekennzeichnet, dass** die wässrige Lösung eine Temperatur zwischen 25 °C und 100 °C aufweist.

12. Verfahren zur Behandlung einer Flüssigkeit, **dadurch gekennzeichnet, dass** die Flüssigkeit durch einen Filter nach einem der Ansprüche 1 bis 7 geleitet wird.

13. Verfahren nach Anspruch 12, **dadurch gekennzeichnet, dass** die zu reinigende Flüssigkeit As(III) und/oder As(V) enthält.

## Revendications

1. Filtre de traitement des liquides, **caractérisé en ce qu'**il comprend un support fait en fibres polymères qui ont au moins un groupe fonctionnel choisi dans l'ensemble constitué par carboxyle et thiol, sur la surface duquel sont fixées des nanoparticules d'oxyde de fer super-paramagnétiques (SPION), dans lequel ledit support est constitué de fibres de polyacrylonitrile (PAN) hydrolysé de formule générale 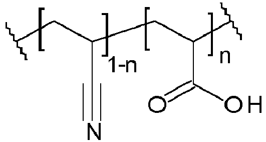 dans laquelle n a une valeur comprise entre 0,01 et 1.

2. Filtre selon la revendication 1, **caractérisé en ce que** lesdites SPION ont une granulométrie moyenne comprise entre 1 nm et 100 nm.

3. Filtre selon la revendication 2, **caractérisé en ce que** lesdites SPION ont une granulométrie moyenne comprise entre 5 nm et 30 nm.

4. Filtre selon l'une quelconque des revendications 2 et 3, **caractérisé en ce que** lesdites fibres ont une taille moyenne comprise entre 100 nm et 3 µm.

5. Filtre selon la revendication 4, **caractérisé en ce que** lesdites fibres ont une taille moyenne comprise entre 300 nm et 1 µm.

6. Filtre selon l'une quelconque des revendications 2 à 5, **caractérisé en ce que** la teneur en SPION est inférieure à 40 mg de SPION par g de fibres.

7. Filtre selon la revendication 6, **caractérisé en ce que** la teneur en SPION est inférieure à 20 mg de SPION par g de fibres.

8. Procédé de fabrication d'un support pour un filtre de traitement des liquides selon la revendication 1, **caractérisé en ce qu'**il comprend :
[a] une étape de filage électrostatique dans laquelle une solution de PAN est préparée dans un solvant avec une teneur en PAN comprise entre 5 et 80 % en poids par rapport au poids total de la solution, et de préférence comprise entre 8,5 et 15 % en poids par rapport au poids total de la solution,
[b] une étape d'hydrolyse des fibres de PAN formées dans l'étape [a],
[c] une étape de fixation des SPION sur la surface desdites fibres.

9. Procédé selon la revendication 8, **caractérisé en ce que** ladite étape d'hydrolyse est effectuée par immersion desdites fibres dans une solution aqueuse d'un hydroxyde de métal alcalino-terreux.

10. Procédé selon la revendication 9, **caractérisé en ce que** ladite solution aqueuse a un pH compris entre 11 et 13.

11. Procédé selon l'une quelconque des revendications 9 et 10, **caractérisé en ce que** ladite solution aqueuse est à une température comprise entre 25°C et 100°C.

12. Procédé de traitement d'un liquide, **caractérisé en ce que** le liquide passe à travers un filtre selon l'une quelconque des revendications 1 à 7.

13. Procédé selon la revendication 12, **caractérisé en ce que** le liquide devant être purifié contient de l'As(III) et/ou de l'As(V).
